# EUROPEAN PATENT SPECIFICATION

(11) **EP 3 754 394 B1**
(45) Date of publication and mention of the grant of the patent: **21.09.2022**
(21) Application number: 20180220.4
(22) Date of filing: 16.06.2020
(51) Int. Cl.: G02B 6/036, C03B 37/027

(54) **OPTICAL FIBER**
OPTISCHE FASER
FIBRE OPTIQUE

(30) Priority: 18.06.2019 JP 2019112800
(43) Date of publication of application: 23.12.2020
(73) Proprietor: SUMITOMO ELECTRIC INDUSTRIES, LTD., Osaka-shi, Osaka 541-0041 (JP)
(72) Inventor: Kawaguchi, Yuki, Osaka-shi, Osaka 541-0041 (JP); Tamura, Yoshiaki, Osaka-shi, Osaka 541-0041 (JP); Sakuma, Hirotaka, Osaka-shi, Osaka 541-0041 (JP); Suzuki, Masato, Osaka-shi, Osaka 541-0041 (JP)
(74) Representative: Hoffmann Eitle

(56) References cited:
- JP-A- 2005 343 703
- JP-A- 2007 297 254
- US-A1- 2013 064 513
- US-A1- 2017 371 096

## Description

### CROSS REFEREMCE

The present aplication is based upon and claims the benefit of the priority from Japanese patent aplication No. P2019-112800, filed on June 18, 2019.

### TECHNICAL FIELD

The present disclosure relates to an optical fiber.

### BACKGROUND

An optical fiber for transmitting signal light is desired to have a low transmission loss. In general-purpose optical fibers, a waveguide structure is formed by a core of which a refractive index is increased by adding germanium (Ge). However, in such a core, since scattering loss due to Ge occurs, it is difficult to sufficiently reduce a transmission loss. Here, in order to reduce the scattering loss of the core, there has been proposed a structure in which silica glass having substantially no additive is used as the core and the refractive index of the cladding is reduced by adding fluorine (F). Incidentally, even in such a structure, a sufficient transmission loss reduction effect may not be obtained. This is because a difference in viscosity between the silica glass core and the cladding containing F is large. As a result, since the stress at the time of drawing is concentrated on the core, glass defects occur.

US Patent Application Publication No. 2016/0170137 (Patent Literature 1) and US Patent Application Publication No. 2017/0219770 (Patent Literature 2) disclose a method of reducing a transmission loss by reducing the viscosity difference (stress difference) between the core and the cladding adjacent to the core in the optical fiber in which the core does not contain Ge. The optical fiber described in Patent Literature 1 includes a core containing chlorine (Cl) without containing Ge and a cladding containing F. This optical fiber further includes a stress relaxation layer containing F between the core and the cladding. The optical fiber described in Patent Literature 2 includes a core and a cladding whose softening point difference is adjusted to 50°C or less so that the viscosities match. Further optical fibers comprising a core, and a cladding which surrounds the core, wherein the cladding includes an inner cladding layer which surrounds the core and an outer cladding layer which surrounds the inner cladding layer are also known from JP 2007 297254 A (Patent Literature 3), US 2013/064513 A1 (Patent Literature 4) and JP 2005 343703 A (Patent Literature 5).

### SUMMARY

An optical fiber according to the invention is defined in claim 1.

### BRIEF DESCRIPTION OF THE DRAWINGS

The foregoing and other purposes, aspects and advantages will be better understood from the following detailed description of a preferred embodiment of the invention with reference to the drawings, in which:
FIG. 1 is a cross-sectional view of an optical fiber according to an embodiment;
FIG. 2 is a diagram showing a refractive index distribution of an optical fiber according to a first example which does not fall within the scope of claim 1;
FIG. 3A is a diagram showing a residual stress distribution of the optical fiber according to the first example;
FIG. 3B is a diagram showing a distribution of an absolute value of a derivative of a residual stress of the optical fiber according to the first example with respect to a radial direction ;
FIG. 4 is a diagram showing a refractive index distribution of an optical fiber according to a second example;
FIG. 5A is a diagram showing a residual stress distribution of the optical fiber according to the second example;
FIG. 5B is a diagram showing a distribution of an absolute value of a derivative of a residual stress of the optical fiber according to the second example with respect to a radial direction;
FIG. 6 is a graph showing a relationship between a transmission loss and an absolute value of a maximum derivative of a residual stress;
FIG. 7 is a diagram showing a refractive index distribution and a potassium distribution of optical fibers according to a third example, which does not fall within the scope of claim 1, and a fourth example;
FIG. 8A is a diagram showing a residual stress distribution of the optical fiber according to the third example;
FIG. 8B is a diagram showing a distribution of an absolute value of a derivative of a residual stress of the optical fiber according to the third example with respect to a radial direction;
FIG. 9A is a diagram showing a residual stress distribution of the optical fiber according to the fourth example; and
FIG. 9B is a diagram showing a distribution of an absolute value of a derivative of a residual stress of the optical fiber according to the fourth example with respect to a radial direction.

### DETAILED DESCRIPTION

### [Problem to be Solved by the Present Disclosure]

In order to increase the communication capacity, an optical fiber that reduces nonlinearity by increasing an effective area and an optical fiber that propagates multiple modes to a core have been proposed. These transmission optical fibers are also required to have low bending loss characteristics. In order to improve the bending loss characteristics, an optical fiber having a refractive index distribution called a W-type or a trench-type in which a cladding is composed of two or more layers is generally used.

The conventional method of reducing a transmission loss by viscous matching focuses on a difference in viscosity (stress) between the core and the cladding where optical power is concentrated, but the optical power actually has a wide distribution. Particularly, in an optical fiber having a multilayer cladding, a stress difference may be large in the cladding. In this case, a transmission loss increases due to structural irregularities. Therefore, in such an optical fiber, a sufficient transmission loss reduction effect cannot be obtained unless the viscosity (stress) difference in the cladding is taken into consideration.

An object of the present disclosure is to provide an optical fiber having a low transmission loss while improving bending loss characteristics.

### [Advantageous Effect of the Present Disclosure]

According to the present disclosure, it is possible to provide an optical fiber having a low transmission loss while improving bending loss characteristics.

### [Description of Embodiments of the Present Disclosure]

First, embodiments of the present disclosure will be listed and described. An optical fiber according to an embodiment is defined by claim 1.

In the optical fiber according to the above-described embodiment, bending loss characteristics can be improved. Further, since a change in the residual stress is gentle as |dσ(r)/dr| ≤ 30 MPa/µm in the cladding, an increase in a transmission loss due to glass defects or structural irregularities can be suppressed.

When the residual stress is σ and the radial position is r, |dσ/dr| ≤ 20 MPa/µm may be satisfied in the cladding. In this case, it is possible to further suppress an increase in the transmission loss.

An effective area of a fundamental mode at a wavelength of 1550 nm may be 100 µm² or more. In this case, the communication capacity can be increased.

A cable cutoff wavelength may be 1530 nm or less. In this case, it is possible to perform a single mode operation in the entire C band.

A compressive stress may remain in the entire area of the core. When a tensile stress remains in the core, a peripheral glass including the core is pulled. As a result, glass defects increase, and thus a transmission loss increases. In this case, since the compressive stress remains in the entire area of the core, an increase in the transmission loss is suppressed.

The core contains an alkali metal element or an alkaline earth metal element. Thus, the viscosity of the core can be reduced when an optical fiber is manufactured by drawing an optical fiber preform. Accordingly, the relaxation of the glass structure is promoted and the transmission loss can be reduced.

The transmission loss at the wavelength of 1550 nm may be 0.174 dB/km or less, 0.164 dB/km or less, or 0.154 dB/km or less.

### [Detailed Description of the Embodiments of the Present Disclosure]

Detailed examples of the optical fiber of the present disclosure will be described below with reference to the drawings. Additionally, the invention is not limited to these examples and is defined by the claims. In the description of the drawings, the same components will be denoted by the same reference numerals and redundant description will be omitted.

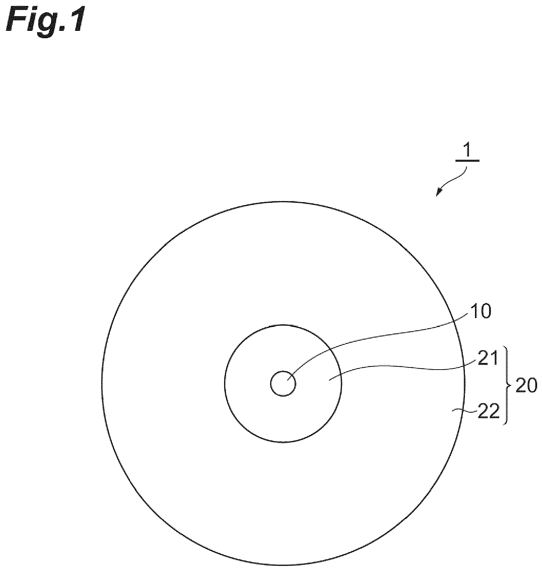

FIG. 1 is a cross-sectional view of an optical fiber according to an embodiment. As shown in FIG. 1, an optical fiber 1 according to this embodiment includes a core 10, a cladding 20 surrounding the core 10, and a resin coating surrounding the cladding 20. The resin coating is not shown in Fig.1. In the optical fiber 1, the cladding 20 has a multilayer structure having two or more layers. In this embodiment, the cladding 20 includes an inner cladding layer 21 which surrounds the core 10 and an outer cladding layer 22 which surrounds the inner cladding layer 21. The cross-sectional view of FIG. 1 shows a cross-section perpendicular to the axial direction of the optical fiber 1.

A core diameter (an outer diameter of the core 10) is, for example, 15 µm. An inner cladding layer diameter (an outer diameter of the inner cladding layer 21) is, for example, 50 µm. An outer cladding layer diameter (an outer diameter of the outer cladding layer 22) is, for example, 125 µm. In this embodiment, the outer cladding layer diameter is also a cladding diameter (an outer diameter of the cladding 20).

A compressive stress remains in the entire area of the core 10. In the optical fiber 1, when the maximum value of the relative refractive index difference of the core 10 is Δn1max, the minimum value of the relative refractive index difference of the inner cladding layer 21 is Δn2min, and the maximum value of the relative refractive index difference of the outer cladding layer 22 is Δn3max, a relationship of Δn2min < Δn3max < Δn1max is satisfied and a W-type refractive index distribution is obtained. The relative refractive index difference is based on the refractive index of pure silica glass. Further, the relationships of -0.15% < Δn1max < 0.05%, -0.5% < Δn2min < -0.2%, and 0.02% < Δn3max - Δn2min < 0.2% are satisfied. Accordingly, bending loss characteristics can be improved. The optical fiber 1 may have a "trench-type" refractive index distribution including a pedestal between the core 10 and the inner cladding layer 21. The pedestal has a relative refractive index difference substantially equal to the relative refractive index difference of the outer cladding layer 22. The optical fiber 1 may have a "vacancy imparting type" refractive index distribution in which the inner cladding layer 21 includes pores.

As described in P. L. Chu and T. Whitbread, "Measurement of stresses in optical fiber and preform" Appl. Opt. 21, 4241, 1982, the residual stress of the optical fiber can be measured using the phase change of light transmitted through the optical fiber. Here, the residual stress indicates a stress component acting on a cross-section perpendicular to the axis of the optical fiber unless otherwise specified.

In the optical fiber 1, the effective area (Aeff) (hereinafter, simply the "effective area") of the fundamental mode at the wavelength of 1550 nm is, for example, 100 µm² or more. Accordingly, the communication capacity can be increased. A cable cutoff wavelength is, for example, 1530 nm or less. For this reason, it is possible to perform a single mode operation in the entire C band. The transmission loss at the wavelength of 1550 nm may be 0.174 dB/km or less, 0.164 dB/km or less, or 0.154 dB/km or less.

The core 10 contains an alkali metal element or an alkaline earth metal element. It can be said that the core 10 contains at least one or more elements from an element group consisting of an alkali metal element and an alkaline earth metal element. The core 10 contains, for example, potassium (K). The inner cladding layer 21 contains an alkali metal element or an alkaline earth metal element. It can be said that the inner cladding layer 21 contains at least one or more elements from an element group consisting of an alkali metal element and an alkaline earth metal element. The inner cladding layer 21 contains, for example, potassium (K). The outer cladding layer 22 does not contain an alkali metal element and an alkaline earth metal element.

An absolute value of a derivative of the relative refractive index difference with respect to the radial direction in the inner cladding layer 21 and the outer cladding layer 22 is 0.2%/µm or less. That is, when the relative refractive index difference of the optical fiber 1 is Δn and the radial position is r, the inner cladding layer 21 and the outer cladding layer 22 have a relationship of |dΔn/dr| ≤ 0.2%/µm. Accordingly, since a viscosity difference hardly occurs between the inner cladding layer 21 and the outer cladding layer 22, a sharp change in the residual stress is suppressed. As a result, since glass defects or structural irregularities are suppressed, an increase in the transmission loss can be suppressed.

When the residual stress is σ and the radial position is r, an absolute value |dσ/dr| of a derivative of the residual stress with respect to the radial direction is 30 MPa/µm or less in the cladding 20. That is, a relationship of |dσ/dr| ≤ 30 MPa/µm is satisfied in the cladding 20. In this way, since a change (gradient) in the residual stress in the cladding 20 becomes gentle, an increase in the transmission loss due to glass defects or structural irregularities can be suppressed. |dσ/dr| may be 20 MPa/µm or less in the cladding 20. That is, a relationship of |dσ/dr| ≤ 20 MPa/µm may be satisfied in the cladding 20. In this case, since a change (gradient) in the residual stress is gentler in the cladding 20, an increase in the transmission loss can be further suppressed.

The optical fiber 1 is, for example, a single mode fiber (SMF). The optical fiber 1 is not limited to the single mode fiber, and may be an optical fiber that propagates a plurality of modes as signal light. In higher-order modes, the effective cross-sectional area is large. Thus, in the transmission loss of the higher-order mode, the influence of the transmission loss due to the residual stress distribution of the cladding 20 tends to increase. As a result, the mode-dependent loss tends to increase. However, according to the optical fiber 1, mode-dependent loss can be reduced.

The core 10 may have a ring core shape having a refractive index depression provided in the center and a ring surrounding the refractive index depression. By adopting the ring core shape, the effective area can be increased while maintaining a mode field diameter (MFD). That is, it is possible to reduce nonlinearity while suppressing an increase in connection loss with a general-purpose single mode fiber. The cladding 20 may have three or more cladding layers as in the case of a trench-type refractive index profile.

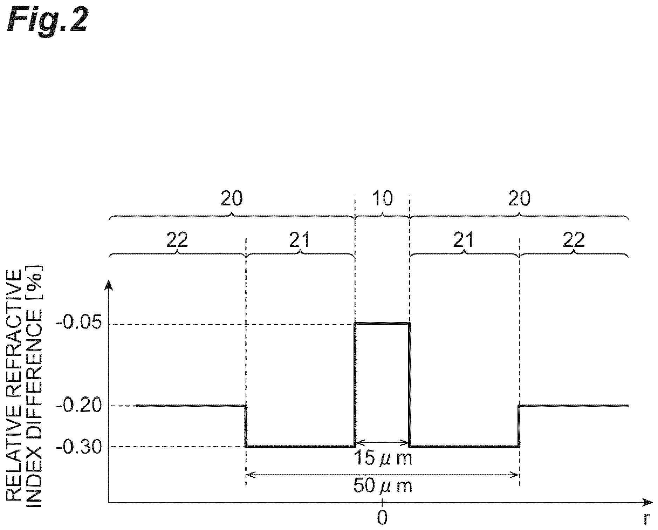

Hereinafter, examples will be described. FIG. 2 is a diagram showing a refractive index distribution of an optical fiber according to a first example which does not fall within the scope of claim 1. In FIG. 2, a horizontal axis indicates a radial position r and a vertical axis indicates a relative refractive index difference based on a refractive index of pure silica glass. For reference, in FIG. 2, reference numerals "10", "20", "21", and "22" are given to the positions corresponding to the core, the cladding, the inner cladding layer, and the outer cladding layer. The optical fiber of the first example has a W-type refractive index distribution. In the optical fiber of the first example, the effective area is 150 µm² and the cable cutoff wavelength is 1420 nm or less. The core contains 100 ppm of potassium by mass. The core diameter is 15 µm and the inner cladding layer diameter is 50 µm.

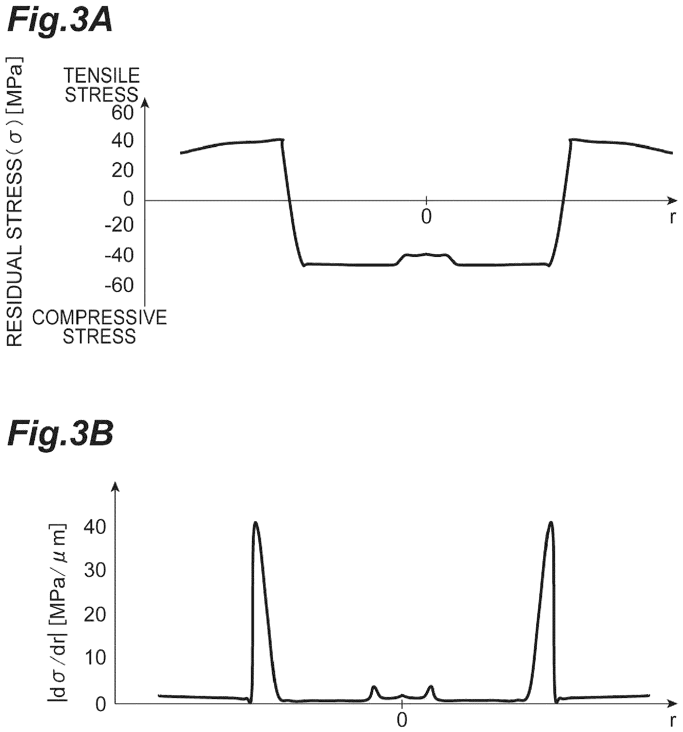

FIG. 3A is a diagram showing a residual stress distribution of the optical fiber according to the first example which does not fall within the scope of claim 1. In FIG. 3A, a horizontal axis indicates a radial position (r) and a vertical axis indicates a residual stress (σ). FIG. 3B is a diagram showing a distribution of an absolute value of a derivative of the residual stress of the optical fiber according to the first example with respect to the radial direction. In FIG. 3B, the horizontal axis indicates a radial position (r) and a vertical axis indicates an absolute value (|dσ(r)/dr|) of a derivative of the residual stress with respect to the radial direction. In FIG. 3A, minus corresponds to a compressive stress and plus corresponds to a tensile stress.

As shown in FIG. 3A, a compressive stress remains in the entire area of the core. A compressive stress remains in the inner cladding layer and a tensile stress remains in the outer cladding layer. As shown in FIG. 3B, a maximum value of |dσ(r)/dr| is 42 MPa/µm which does not fall within the scope of claim 1.

In the optical fiber of the first example which does not fall within the scope of claim 1, a refractive index difference is provided between the inner cladding layer and the outer cladding layer by adjusting the fluorine concentration. At the same time, a viscosity difference also occurs between the inner cladding layer and the outer cladding layer. Thus, the residual stress sharply changes (in an interface) between the inner cladding layer and the outer cladding layer. A sharp change in the residual stress increases the transmission loss due to glass defects or structural irregularities. The transmission loss of the optical fiber of the first example is 0.156 dB/km.

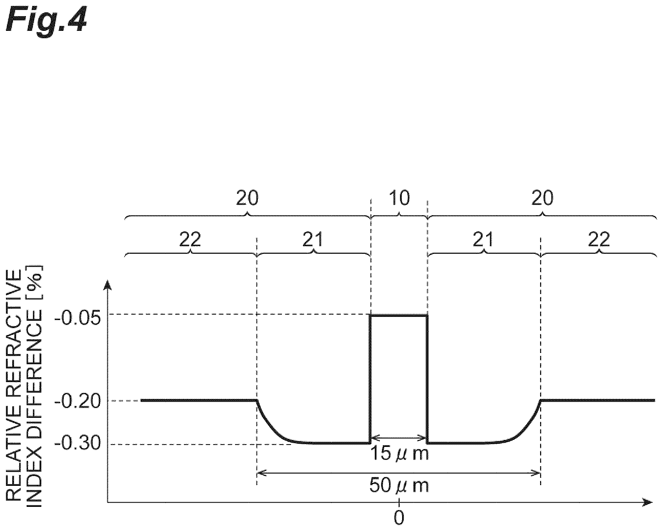

FIG. 4 is a diagram showing a refractive index distribution of an optical fiber according to a second example. In FIG. 4, a horizontal axis indicates a radial position r and a vertical axis indicates a relative refractive index difference based on a refractive index of pure silica glass. For reference, in FIG. 4, reference numerals "10", "20", "21", and "22" are given to the positions corresponding to the core, the cladding, the inner cladding layer, and the outer cladding layer. As shown in FIG. 4, the optical fiber of the second example was manufactured from a preform whose fluorine concentration distribution was adjusted so that the residual stress gradually changed between the inner cladding layer and the outer cladding layer. The optical fiber of the second example has a W-type refractive index distribution. In the optical fiber of the second example, the effective area is 150 µm² and the cable cutoff wavelength is 1420 nm or less. The core contains 100 ppm of potassium by mass. The core diameter is 15 µm and the inner cladding layer diameter is 50 µm.

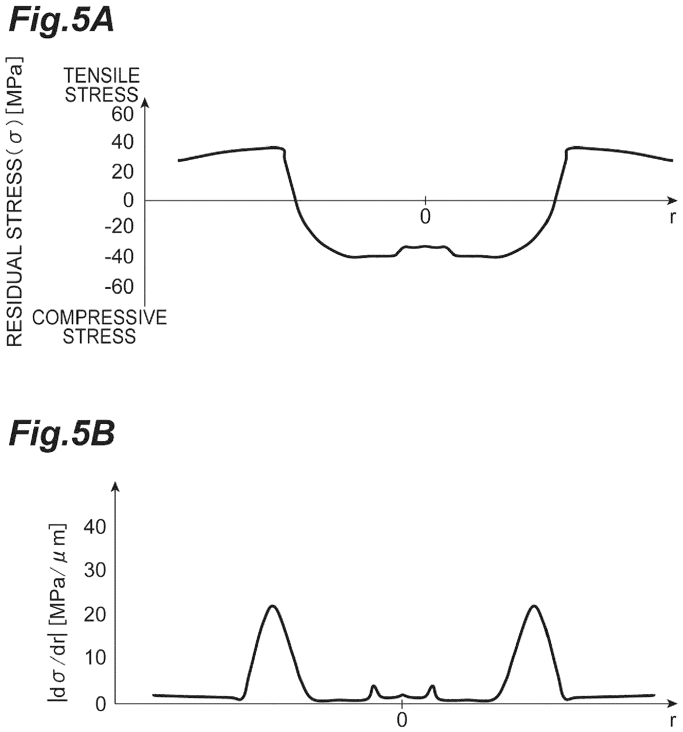

FIG. 5A is a diagram showing a residual stress distribution of the optical fiber according to the second example. In FIG. 5A, a horizontal axis indicates a radial position (r) and a vertical axis indicates a residual stress (σ). In FIG. 5A, minus corresponds to a compressive stress and plus corresponds to a tensile stress. FIG. 5B is a diagram showing a distribution of an absolute value of a derivative of the residual stress of the optical fiber according to the second example with respect to the radial direction. In FIG. 5B, a horizontal axis indicates a radial position (r) and a vertical axis indicates an absolute value (|dσ/dr|) of a derivative of the residual stress with respect to the radial direction.

As shown in FIG. 5A, a compressive stress remains in the entire area of the core. A compressive stress remains in a portion near the core of the inner cladding layer. A residual stress gently changes from a compressive stress to a tensile stress in a portion near the outer cladding layer of the inner cladding layer. A tensile stress remains in the outer cladding layer. As shown in FIG. 5B, a maximum value of |dσ/dr| is 24 MPa/µm. The transmission loss of the optical fiber of the second example is 0.152 dB/km.

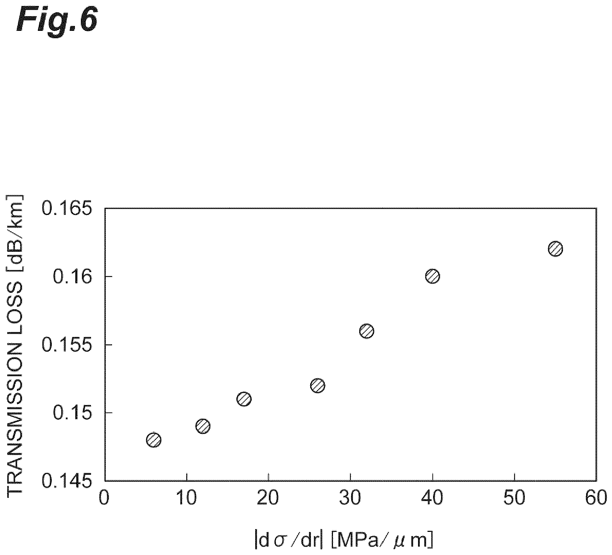

FIG. 6 is a graph showing a relationship between a transmission loss and an absolute value of a maximum derivative of a residual stress. In FIG. 6, a horizontal axis indicates a maximum value of |dσ/dr| of a cladding and a vertical axis indicates a transmission loss. As shown in FIG. 6, the transmission loss can be reduced by setting |dσ/dr| to 30 MPa/µm or less. The transmission loss can be further reduced by setting |dσ/dr| to be 20 MPa/µm or less.

In the second example, as a method of adjusting a change in the residual stress to be gentle, the fluorine concentration in the cladding was adjusted, but the method of adjusting the residual stress is not limited thereto. The concentration distribution of another halogen element such as chlorine or bromine, germanium, phosphorus (P), an alkali metal element, or an alkaline earth metal element may be adjusted. Further, for example, an element such as sodium (Na) or potassium having a high diffusion rate in glass can have a desired residual stress distribution by adjusting conditions such as a drawing tension or a drawing speed to control the diffusion.

A case in which a core portion of an optical fiber preform (glass preform) contains potassium is considered. The diffusion speed of potassium is relatively fast. Accordingly, even if potassium is distributed in a center portion of the core portion in the optical fiber preform, potassium is diffused by heating during drawing particularly in a drawdown portion (a portion where the outer diameter decreases). As a result, potassium is distributed in the entire area in the fiber state.

For example, the residence time of potassium in the drawdown portion where diffusion easily occurs is shortened by increasing the drawing speed. Accordingly, it is possible to suppress the diffusion of potassium. Further, it is possible to suppress the diffusion of potassium by increasing a tension during drawing. This is because the effect of heat diffusion becomes weak when the temperature required for drawing the optical fiber from the optical fiber preform becomes lower as the tension becomes higher.

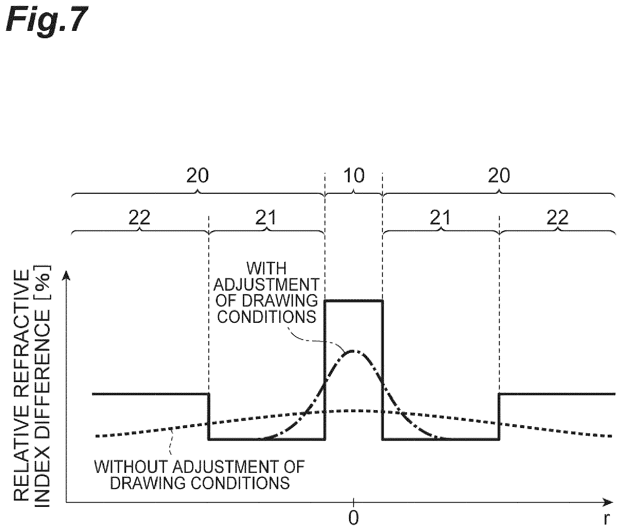

FIG. 7 is a diagram showing a refractive index distribution and a potassium distribution of optical fibers according to a third example and a fourth example. In FIG. 7, a horizontal axis indicates a radial position r and a vertical axis indicates a relative refractive index difference based on a refractive index of pure silica glass. The vertical axis indicates a concentration (a.u.) of potassium. For reference, in FIG. 7, reference numerals "10", "20", "21", and "22" are given to the positions corresponding to the core, the cladding, the inner cladding layer, and the outer cladding layer. The refractive index distributions of the optical fibers of the third and fourth examples are indicated by a solid line, the potassium distribution of the optical fiber of the third example is indicated by a dashed line, and the potassium distribution of the optical fiber of the fourth example is indicated by a one-dotted chain line. The optical fibers of the third and fourth examples have a W-type refractive index distribution. In the optical fibers of the third and fourth examples, the effective area is 150 µm² and the cable cutoff wavelength is 1420 nm or less. The core contains 100 ppm of potassium by mass. The core diameter is 15 µm and the inner cladding layer diameter is 50 µm.

The optical fiber according to the third example was manufactured without adjusting the above-described drawing conditions (without adjustment of the drawing conditions). The optical fiber according to the fourth example was manufactured by adjusting the above-described drawing conditions (with adjustment of the drawing conditions). The optical fibers according to the third and fourth examples have the same refractive index distribution and have different potassium distributions. Potassium has an effect of reducing the viscosity of glass. For this reason, it is possible to adjust the residual stress distribution of the cladding by controlling the diffusion of potassium so that the potassium distribution range becomes appropriate. Specifically, the residual stress is not continuous in a boundary between an area with potassium and an area without potassium. Accordingly, a change (gradient) in the residual stress can be made gentle in the entire cladding.

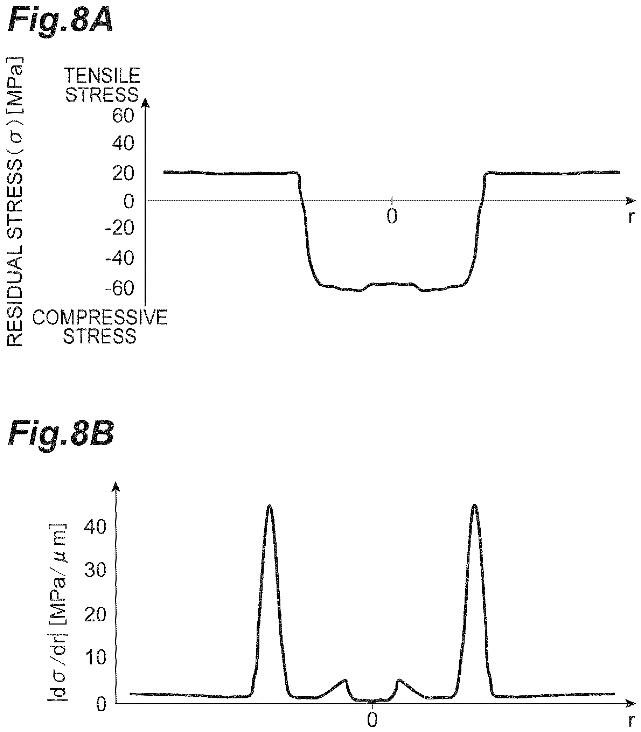

FIG. 8A is a diagram showing a residual stress distribution of the optical fiber according to the third example. In FIG. 8A, a horizontal axis indicates a radial position (r) and a vertical axis indicates a residual stress (σ). FIG. 8B is a diagram showing a distribution of an absolute value of a derivative of the residual stress of the optical fiber according to the third example with respect to the radial direction. In FIG. 8B, a horizontal axis indicates a radial position (r) and a vertical axis indicates an absolute value (|dσ/dr|) of a derivative of the residual stress with respect to the radial direction. In FIG. 8A, minus corresponds to a compressive stress and plus corresponds to a tensile stress.

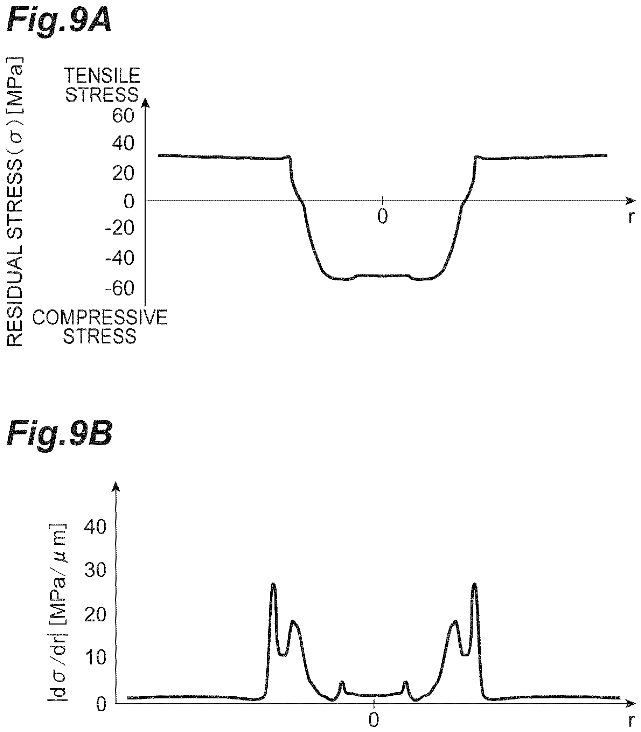

FIG. 9A is a diagram showing a residual stress distribution of the optical fiber according to the fourth example. In FIG. 9A, a horizontal axis indicates a radial position (r) and a vertical axis indicates a residual stress (σ). FIG. 9B is a diagram showing a distribution of an absolute value of a derivative of the residual stress of the optical fiber according to the fourth example with respect to the radial direction. In FIG. 9B, a horizontal axis indicates a radial position (r) and a vertical axis indicates an absolute value (|dσ/dr|) of a derivative of the residual stress with respect to the radial direction. In FIG. 9A, minus corresponds to a compressive stress and plus corresponds to a tensile stress.

As shown in FIGS. 8A and 9A, in any one of the optical fibers of the third and fourth examples, a compressive stress remains in the entire area of the core. A compressive stress remains also in a portion near the core of the inner cladding layer. A residual stress changes from a compressive stress to a tensile stress in a portion near the outer cladding layer of the inner cladding layer. A tensile stress remains in the outer cladding layer. In the optical fiber of the fourth example, a change in the residual stress in a portion near the outer cladding layer of the inner cladding layer is gentler than in the optical fiber of the third example.

As shown in FIGS. 8B and 9B, in the optical fiber of the third example, the maximum value of |dσ/dr| is 45 MPa/µm which does not fall within the scope of claim 1, but in the optical fiber of the fourth example, the maximum value of |dσ/dr| is 28 MPa/µm. The transmission loss of the optical fiber of the third example is 0.161 dB/km, but the transmission loss of the optical fiber of the fourth example is 0.154 dB/km.

## Claims

1. An optical fiber (1) comprising:
a core (10); and
a cladding (20) which surrounds the core (10),
wherein the cladding (20) includes an inner cladding layer (21) which surrounds the core (10) and an outer cladding layer (22) which surrounds the inner cladding layer (21),
and wherein a residual stress σ(r) at a radial position r satisfies | dσ(r)/dr| ≤ 30 MPa/ µm in the cladding (20),
**characterized in that**
a maximum value Δn1max of a relative refractive index difference of the core (10), a minimum value Δn2min of a relative refractive index difference of the inner cladding layer (21), and a maximum value Δn3max of a relative refractive index difference of the outer cladding layer (22) respectively satisfy relationships of -0.15% < Δn1max < 0.05%, -0.5% < Δn2min < -0.2%, 0.02% < Δn3max - Δn2min < 0.2%, and Δn3max < Δn1max,
wherein the relative refractive index difference is based on the refractive index of pure silica glass,
wherein the core (10) and the inner cladding layer (21) contain an alkali metal element or an alkaline earth metal element,
wherein the outer cladding layer (22) does not contain an alkali metal element and an alkaline earth metal element, and
wherein an absolute value of a derivative of the relative refractive index difference with respect to a radial direction in the inner cladding layer (21) and the outer cladding layer (22) is 0.2%/µm or less.

2. The optical fiber (1) according to claim 1,
wherein the residual stress σ(r) satisfies a formula, |dσ(r)/dr| ≤ 20 MPa/µm in the cladding (20).

3. The optical fiber (1) according to claim 1 or 2,
wherein an effective area of a fundamental mode at a wavelength of 1550 nm is 100 µm² or more.

4. The optical fiber (1) according to claim 3,
wherein a cable cutoff wavelength is 1530 nm or less.

5. The optical fiber (1) according to any one of claims 1 to 4,
wherein a compressive stress remains in an entire area of the core (10).

6. The optical fiber (1) according to any one of claims 1 to 5,
wherein a transmission loss at a wavelength of 1550 nm is 0.174 dB/km or less.

7. The optical fiber (1) according to any one of claims 1 to5,
wherein a transmission loss at a wavelength of 1550 nm is 0.164 dB/km or less.

8. The optical fiber (1) according to any one of claims 1 to 5,
wherein a transmission loss at a wavelength of 1550 nm is 0.154 dB/km or less.

## Patentansprüche

1. Optische Faser (1), umfassend:
einen Kern (10); und
eine Ummantelung (20), die den Kern (10) umgibt,
wobei die Ummantelung (20) eine innere Ummantelungsschicht (21), die den Kern (10) umgibt, und eine äußere Ummantelungsschicht (22), die die innere Ummantelungsschicht (21) umgibt, beinhaltet,
und wobei eine Restspannung o(r) an einer radialen Position r | dσ(r)/dr | ≤ 30 MPa/ µm in der Ummantelung (20) erfüllt,
**dadurch gekennzeichnet, dass**
ein Maximalwert Δn1max einer relativen Brechungsindexdifferenz des Kerns (10), ein Minimalwert Δn2min einer relativen Brechungsindexdifferenz der inneren Ummantelungsschicht (21) und ein Maximalwert Δn3max einer relativen Brechungsindexdifferenz der äußeren Ummantelungsschicht (22) Verhältnisse von - 0,15% < Δn1max < 0,05%, -0,5% < Δn2min < -0,2%, 0,02% < Δn3max -Δn2min < 0,2% beziehungsweise Δn3max < Δn1max erfüllen,
wobei die relative Brechungsindexdifferenz auf dem Brechungsindex von reinem Quarzglas beruht,
wobei der Kern (10) und die innere Ummantelungsschicht (21) ein Alkalimetallelement oder ein Erdalkalimetallelement beinhalten,
wobei die äußere Ummantelungsschicht (22) kein Alkalimetallelement und kein Erdalkalimetallelement beinhaltet, und
wobei ein Absolutwert einer Ableitung der relativen Brechungsindexdifferenz in Bezug auf eine radiale Richtung in der inneren Ummantelungsschicht (21) und der äußeren Ummantelungsschicht (22) 0,2%/µm oder weniger ist.

2. Optische Faser (1) nach Anspruch 1,
wobei die Restspannung σ(r) eine Formel |dσ(r)/dr| ≤ 20 MPa/µm in der Ummantelung (20) erfüllt.

3. Optische Faser (1) nach Anspruch 1 oder 2,
wobei eine effektive Fläche einer Grundmode bei einer Wellenlänge von 1550 nm 100 µm² oder mehr ist.

4. Optische Faser (1) nach Anspruch 3,
wobei eine Kabelgrenzwellenlänge 1530 nm oder weniger ist.

5. Optische Faser (1) nach einem der Ansprüche 1 bis 4,
wobei eine Druckspannung in einer gesamten Fläche des Kerns (10) verbleibt.

6. Optische Faser (1) nach einem der Ansprüche 1 bis 5,
wobei ein Übertragungsverlust bei einer Wellenlänge von 1550 nm 0,174 dB/km oder weniger ist.

7. Optische Faser (1) nach einem der Ansprüche 1 bis 5,
wobei ein Übertragungsverlust bei einer Wellenlänge von 1550 nm 0,164 dB/km oder weniger ist.

8. Optische Faser (1) nach einem der Ansprüche 1 bis 5,
wobei ein Übertragungsverlust bei einer Wellenlänge von 1550 nm 0,154 dB/km oder weniger ist.

## Revendications

1. Fibre optique (1) comprenant :
un noyau (10) ; et
un revêtement (20) qui entoure le noyau (10),
dans laquelle le revêtement (20) inclut une couche de revêtement intérieure (21) qui entoure le noyau (10) et une couche de revêtement extérieure (22) qui entoure la couche de revêtement intérieure (21),
et dans laquelle une contrainte résiduelle σ(r) au niveau d'une position radiale r satisfait à | dσ(r)/dr | ≤ 30 MPa/µm dans le revêtement (20),
**caractérisée en ce que**
une valeur maximale Δn1max d'une différence d'indice de réfraction relative du noyau (10), une valeur minimale Δn2min d'une différence d'indice de réfraction relative de la couche de revêtement intérieure (21), et une valeur maximale Δn3max d'une différence d'indice de réfraction relative de la couche de revêtement extérieure (22) satisfont respectivement aux relations -0,15 % < Δn1max < 0,05 %, -0,5 % < Δn2min < - 0,2 %, 0,02 % < Δn3max - Δn2min < 0,2 %, et Δn3max < Δn1max,
dans laquelle la différence d'indice de réfraction relative est basée sur l'indice de réfraction de verre de silice pur,
dans laquelle le noyau (10) et la couche de revêtement intérieure (21) contiennent un élément de métal alcalin ou un élément de métal alcalino-terreux,
dans laquelle la couche de revêtement extérieure (22) ne contient pas un élément de métal alcalin et un élément de métal alcalino-terreux, et
dans laquelle une valeur absolue d'un dérivé de la différence d'indice de réfraction relative par rapport à une direction radiale dans la couche de revêtement intérieure (21) et la couche de revêtement extérieure (22) est de 0,2 %/µm ou moins.

2. Fibre optique (1) selon la revendication 1,
dans laquelle la contrainte résiduelle σ(r) satisfait à une formule |dσ(r)/dr| ≤ 20 MPa/µm dans le revêtement (20).

3. Fibre optique (1) selon la revendication 1 ou 2,
dans laquelle une surface effective d'un mode fondamental à une longueur d'ondes de 1 550 nm est de 100 µm² ou plus.

4. Fibre optique (1) selon la revendication 3,
dans laquelle une longueur d'ondes de coupe de câble est de 1 530 nm ou moins.

5. Fibre optique (1) selon l'une quelconque des revendications 1 à 4,
dans laquelle une contrainte de compression reste dans une surface entière du noyau (10).

6. Fibre optique (1) selon l'une quelconque des revendications 1 à 5,
dans laquelle une perte de transmission à une longueur d'ondes de 1 550 nm est de 0,174 dB/km ou moins.

7. Fibre optique (1) selon l'une quelconque des revendications 1 à 5,
dans laquelle une perte de transmission à une longueur d'ondes de 1 550 nm est de 0,164 dB/km ou moins.

8. Fibre optique (1) selon l'une quelconque des revendications 1 à 5,
dans laquelle une perte de transmission à une longueur d'ondes de 1 550 nm est de 0,154 dB/km ou moins.
